# EUROPEAN PATENT SPECIFICATION

(11) **EP 4 284 995 B1**
(45) Date of publication and mention of the grant of the patent: **04.12.2024**
(21) Application number: 22700482.7
(22) Date of filing: 12.01.2022
(51) Int. Cl.: E05F 5/00

(54) **BRAKE DEVICE, ARRANGEMENT FOR CONTROLLING MOVEMENTS OF ACCESS MEMBER, AND ACCESS MEMBER SYSTEM**
BREMSVORRICHTUNG, ANORDNUNG ZUR STEUERUNG DER BEWEGUNG EINES ZUGANGSELEMENTS, UND ZUGANGSELEMENTSYSTEM
DISPOSITIF DE FREINAGE, AGENCEMENT POUR COMMANDER DES MOUVEMENTS D'UN ÉLÉMENT D'ACCÈS, ET SYSTÈME D'ÉLÉMENT D'ACCÈS

(30) Priority: 28.01.2021 SE 2150100
(43) Date of publication of application: 06.12.2023
(73) Proprietor: ASSA ABLOY AB, 107 23 Stockholm (SE)
(72) Inventor: ARBEGARD, Bernt, 8950-414 Altura (PT)
(74) Representative: Kransell & Wennborg KB
(86) International application number: PCT/EP2022/050511
(87) International publication number: WO 2022/161766

(56) References cited:
- DE-A1- 10 109 141
- US-A1- 2020 392 758
- US-B1- 10 454 341

## Description

### Technical Field

The present disclosure generally relates to a brake device. In particular, a brake device comprising a soft magnet, an arrangement for controlling movements of an access member, and an access member system comprising the arrangement, are provided.

### Background

Some conventional door closers comprise a spring and a hydraulic cylinder containing oil. The spring may be increasingly compressed (or otherwise deformed) during opening of the door leaf. The hydraulic cylinder may provide a damping force proportional to the speed of the door leaf. The use of oil may however not be desired, for example due to poor fire safety, leakage and low sustainability. Moreover, such conventional door closers often have unsatisfactory reliability, for example due to temperature changes and wear.

US 4973894 A discloses a door closer comprising a force transmission shaft turning in accordance with the movement of a door, a spring element operationally connected with the force transmission shaft so that opening of the door takes place against the force of the spring element, and a dynamic machine comprising rotor means arranged in force transmission connection with the force transmission shaft and stator means operationally connected with the rotor means.

US 10454341 B1 discloses an electro permanent magnet, EPM, comprising a first permanent magnet, a second permanent magnet, a coil and a target object. An actuator comprising a plurality of EPMs is also disclosed. The actuator comprises a piston and a braking pad coupled to the piston. The piston is moved due to repulsive forces between two or more of the EPMs.

DE 10109141 A1 discloses a brake device comprising a pivoting lever having a ratchet tooth and being pivotable about an axis, a tension spring, a locking wheel having ratchet teeth, a traction element coupled to a vehicle door and to a guide element fixed to the ratchet wheel, and an electromagnet.

### Summary

In order to avoid hydraulics in a door closer, the door closer may comprise an electric machine and a closing spring forcing the door leaf towards a closed position. The electric machine can function as an electric generator when the door leaf is opened and/or closed to thereby harvest electric energy. In order to hold the door leaf still, the electric machine can function as an electric motor to hold the door leaf still against the force from the closing spring. For such operation, the electric motor must be supplied with a holding current. A considerable amount of energy is therefore consumed during the door leaf holding phase without performing any mechanical work.

For most types of energy harvesting based systems, the total energy budget should be a great concern. It is therefore as important to reduce the energy consumption as it is to increase the amount of energy harvested.

One object of the present disclosure is to provide a brake device having a low power consumption.

A further object of the present disclosure is to provide a brake device having no power consumption in each of a released state and a braking state.

A still further object of the present disclosure is to provide a brake device having small dimensions.

A still further object of the present disclosure is to provide a brake device having a less complex design.

A still further object of the present disclosure is to provide a brake device having a cost effective design.

A still further object of the present disclosure is to provide a brake device having a fail-safe operation.

A still further object of the present disclosure is to provide a brake device solving several or all of the foregoing objects in combination.

A still further object of the present disclosure is to provide an arrangement for controlling movements of an access member relative to a frame, which arrangement solves one, several or all of the foregoing objects.

A still further object of the present disclosure is to provide an access member system comprising a frame, an access member and an arrangement, which access member system solves one, several or all of the foregoing objects.

According to one aspect, there is provided a brake device comprising a hard magnet; a soft magnet configured to switch polarity between a first polarity and a second polarity when being subjected to a magnetic field and configured to maintain the polarity when the magnetic field is removed; an electric coil located around the soft magnet; an electric control system configured to apply a current pulse to the electric coil to generate the magnetic field for changing the polarization of the soft magnet; and a brake element comprising a magnetic target section, the brake element being arranged to move to a released position when the soft magnet adopts the first polarity, and arranged to move to a braking position due to a magnetic field generated by the hard magnet and the soft magnet in combination and acting on the magnetic target section when the soft magnet adopts the second polarity.

When a current pulse of a certain duration and level is applied to the electric coil wound around the soft magnet, the magnetic field generated by the current pulse flips the polarity of the soft magnet from the first polarity to the second polarity. Once the soft magnet has been flipped from the first polarity to the second polarity, the hard magnet and the soft magnet combine to generate a magnetic field. This magnetic field acts on the magnetic target section of the brake element (e.g. by means of an attractive or repulsive magnetic force) such that the brake element moves from the released position to the braking position. Once the polarity of the soft magnet has been switched from the first polarity to the second polarity and the brake element has moved from the released position to the braking position, the magnetic field generated by the hard magnet and the soft magnet in combination hold the brake element in the braking position without power supply. The released position and the braking position may constitute distinct positions for the brake element.

When the brake element adopts the released position, the brake device adopts a released state. Conversely, when the brake element adopts the braking position, the brake device adopts a braking state. The brake device is bi-stable. With bi-stable is meant that the brake device can be in any of the released state and the braking state without consuming energy, and that energy is only required to switch the brake device between the released state and the braking state.

The hard magnet, the soft magnet and the electric coil form an electropermanent magnet (EPM). The EPM provides a high magnetic force when the soft magnet adopts the second polarity and a zero magnetic force, or near zero magnetic force, when the soft magnet adopts the first polarity. The EPM may be stationary.

The soft magnet has a lower coercivity than the hard magnet. Due to its low coercivity, the polarity of the soft magnet is switched by the applied current pulse. Due to its high coercivity, the polarity of the hard magnet is not affected by the applied current pulse. The hard magnet may for example comprise a Neodymium alloy such as a Neodymium-Iron-Boron (NdFeB), or other alloy having a relatively high intrinsic coercivity. The soft magnet may for example comprise an Alnico alloy, Iron-Cobalt-Vanadium, or other alloy having a relatively low intrinsic coercivity.

Since the polarity of the soft magnet can be switched by a current pulse, only a very small amount of electric energy is required to switch the EPM to thereby effect movement of the brake element between the released position and the braking position. The brake device is therefore an ultra-low-power brake device. The brake device may only require a few mJ to switch between the released state and the braking state.

When the soft magnet adopts the second polarity, the brake element may be arranged to move to the braking position due to either an attractive magnetic force or a repulsive magnetic force.

The brake device may for example be used in a non-hydraulic arrangement for controlling movements of an access member relative to a frame, such as a door closer. Alternative uses of the brake device are however conceivable.

The brake element may be configured to brake an output member. To this end, the brake element may engage the output member in the braking position. The energy required to switch the EPM is much less than the energy required to hold the output member by means of an electric motor.

The brake device may be a frictional brake device. In this case, the brake element may frictionally engage the output member in the braking position.

The magnetic target section may be of any type for being influenced by a magnetic field of the EPM. The magnetic target section may close a magnetic circuit in the braking position of the brake element. The magnetic target section may for example comprise a ferromagnetic material, such as a soft magnetic material, in case the brake element is arranged to move to the braking position due to an attractive magnetic force. The brake element may for example comprise a permanent magnet in case the brake element is arranged to move to the braking position due to a repulsive magnetic force.

The brake element may be forced towards the released position. To this end, the brake device may further comprise a releasing spring arranged to force the brake element towards the released position. Alternatively, or in addition, the brake element may be arranged to be forced towards the released position by means of gravity.

The brake device may further comprise a brake hinge. In this case, the brake element may be rotatable about the brake hinge between the released position and the braking position.

The brake element may comprise a brake pad. The brake pad may be configured to frictionally engage a friction surface of an output member when the brake element adopts the braking position in order to effect braking.

The control system may comprise a driver for applying a first current pulse to the electric coil to switch the soft magnet from the second polarity to the first polarity, and for applying a second current pulse to the electric coil to switch the soft magnet from the first polarity to the second polarity. The control system may further comprise a capacitor for applying a first current pulse to the electric coil to switch the soft magnet from the second polarity to the first polarity; a normally open switch connected in series with the driver and the electric coil; and a normally closed switch connected in series with the capacitor and the electric coil.

The capacitor may have a capacitance sufficient for switching the soft magnet from the second polarity to the first polarity. The first current pulse may be a negative pulse and the second current pulse may be a positive pulse.

By means of the capacitor, the normally open switch and the normally closed switch, the first current pulse will be applied by the capacitor through the electric coil in case a power supply is lost. It can thereby be ensured that the brake device always adopts the released state when a power supply is lost. The control system according to this variant therefore provides a fail-safe operation. The power supply may for example be a battery or a mains power supply. By means of the power supply, a control voltage may be supplied so the control system.

According to a further aspect, there is provided an arrangement for controlling movements of an access member relative to a frame, the arrangement comprising a brake device according to the present disclosure arranged to brake the access member. The arrangement may be a door closer. The access member may be a door leaf.

The arrangement may further comprise an electromagnetic generator having a rotor arranged to be driven to generate electric energy by movement of the access member. The arrangement can thus be provided with energy harvesting functionality.

The generator may be constituted by an electric machine configured to function as an electric generator and as an electric motor. The electric machine may for example be of the BDC (brushed direct current) type or the BLDC (brushless direct current) type.

The control system may be electrically powered by the generator. The arrangement may thus be an energy harvesting arrangement, such as an energy harvesting door closer.

The arrangement may further comprise an output member arranged to be contacted by the brake element when the brake element adopts the braking position. To this end, the output member may comprise a friction surface for being contacted by the brake element, such as by a brake pad of the brake element.

The output member may be rotatable or linearly movable. The output member may be driven by the rotor or may be fixed to the rotor. In any case, the brake element (e.g. a brake pad thereof) may engage the output member in the braking position to effect braking of the output member, and thereby also of the access member.

The arrangement may further comprise a transmission arranged to transmit a movement of the access member to a movement of the output member. The transmission may be a gear train comprising two or more gear wheels. In this case, one of the gear wheels may be fixed to the rotor. Alternatively, the transmission may be a belt transmission or a chain transmission.

The arrangement may further comprise an input member. The input member may be fixed to a door leaf. In this case, the input member may be concentric with a door hinge of the door leaf. The input member may form part of the transmission. In this case, the input member may be a gear wheel.

The arrangement may further comprise a closing spring for connection to each of the access member and a frame. The closing spring may be configured to force the access member towards a closed position in relation to the frame. The closing spring may thus be tensioned to store mechanical energy when the access member is opened.

The transmission may comprise a freewheel device configured to freewheel when the access member moves in an opening direction. The freewheel device may comprise a freewheel or a unidirectional clutch. The freewheel device enables the access member to always be opened, regardless of the state of the brake device. By means of the freewheel device, the access member can be moved to a more open position despite the braking adopting the braking position. This is advantageous for less strong people, like children or elderly people. When the brake device is in the braking state and the access member is in the closed position, the access member can be incrementally pushed (e.g. by several small pushes) to the open position.

When the transmission comprises the freewheel device, energy harvesting only takes place during closing movements of the access member. The freewheel device therefore enables the access member to be opened more easily, e.g. substantially only the force of a closing spring needs to be overcome.

The rotor may be arranged to be driven by the transmission.

The transmission may be a speed increasing transmission. In this way, a holding force required to hold the access member by braking the output member is significantly lower than a holding force required to hold the access member by directly braking the access member. This significantly lower holding force in turn enables the brake device to be reduced in size. A further advantage with the speed increasing transmission is that the rotor of the generator can be driven at higher speeds. This enables a more effective harvesting of electric energy and the generator to be reduced in size.

According to a further aspect, there is provided an access member system comprising a frame, an access member movable relative to the frame, and an arrangement according to the present disclosure. The access member may be a door leaf.

The arrangement may be configured to hold the access member in an open position during a selectable holding time. After this holding time, the brake device is commanded to adopt the released state such that the access member starts to close by means of the closing spring. During this closing movement of the access member, energy can be harvested by means of the generator. The load of the generator can be controlled in order to control a closing speed of the access member.

The access member system may further comprise a closing spring arranged to force the access member towards a closed position.

### Brief Description of the Drawings

Further details, advantages and aspects of the present disclosure will become apparent from the following description taken in conjunction with the drawings, wherein:
- Fig. 1:: schematically represents an arrangement comprising a brake device where a brake element is in a released position;
- Fig. 2:: schematically represents the arrangement after movement of an output member;
- Fig. 3:: schematically represents the arrangement when the brake element adopts a braking position to brake the output member;
- Fig. 4:: schematically represents an EPM and a control system of the brake device;
- Fig. 5:: schematically represents the EPM and the control system when a power supply is lost;
- Fig. 6:: schematically represents an access member system comprising the brake device; and
- Fig. 7:: schematically represents a further arrangement comprising a further brake device.

### Detailed Description

In the following, a brake device comprising a soft magnet, an arrangement for controlling movements of an access member, and an access member system comprising the arrangement, will be described. The same or similar reference numerals will be used to denote the same or similar structural features.

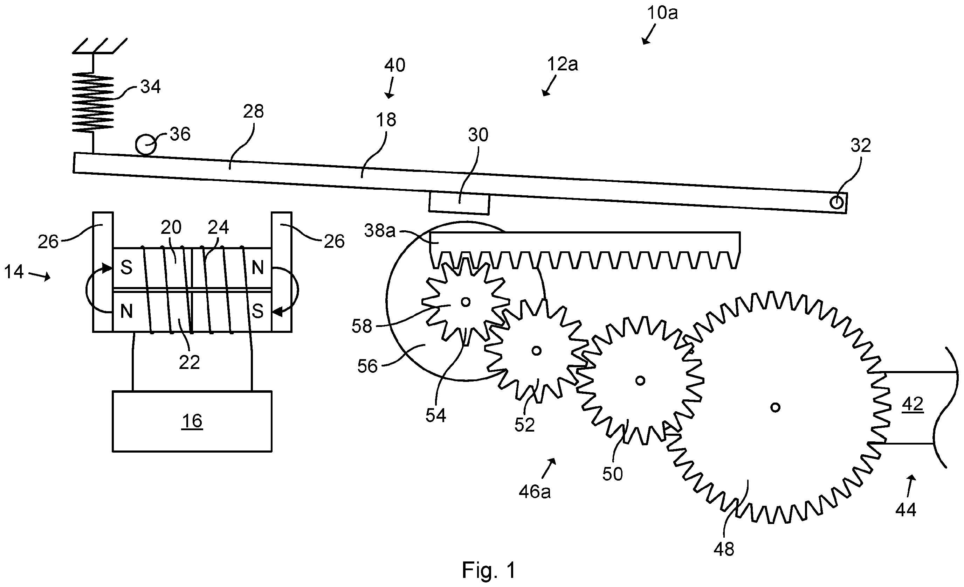

Fig. 1 schematically represents an arrangement 10a. The arrangement 10a of this example is a door closer. The arrangement 10a comprises a brake device 12a. The brake device 12a comprises an electropermanent magnet, EPM, 14, an electric control system 16 and a brake element 18.

The EPM 14 comprises a hard magnet 20, a soft magnet 22 and an electric coil 24. The soft magnet 22 is configured to switch polarity between a first polarity and a second polarity when being subjected to a magnetic field. In Fig. 1, the soft magnet 22 has the first polarity.

The EPM 14 of this example further comprises pole pieces 26. The hard magnet 20 and the soft magnet 22 are here arranged in parallel between the pole pieces 26. The pole pieces 26 may be made of a ferromagnetic material. The electric coil 24 is wound around the hard magnet 20 and the soft magnet 22.

The brake element 18 comprises a magnetic target section 28. The magnetic target section 28 is here exemplified as an arm of a material strongly responsive to magnetic fields, such as a ferromagnetic material. The magnetic target section 28 may be made of a soft magnetic material with no or low remanence. As an alternative example, the magnetic target section 28 may form only a part of an arm or other type of member.

The brake element 18 of this example further comprises a brake pad 30. The brake pad 30 is fixed to the magnetic target section 28. The brake pad 30 may for example be made of rubber.

The brake device 12a further comprises a brake hinge 32. The brake element 18 is rotatable about the brake hinge 32.

The brake device 12a of this example further comprises a releasing spring 34, here exemplified as a coil spring. One end of the releasing spring 34 is connected to a stationary structure (not denoted) and the other end of the releasing spring 34 is connected to the brake element 18.

The brake device 12a of this example further comprises a mechanical stop 36. The mechanical stop 36 is here exemplified as a stationary pin.

The arrangement 10a of this example further comprises an output member 38a. The output member 38a of this example is a toothed rack. The output member 38a is linearly movable along its longitudinal axis.

When the soft magnet 22 has the first polarity according to Fig. 1, the hard magnet 20 and the soft magnet 22 have opposing magnetizations. As a consequence, the EPM 14 is in an off state producing no, or substantially no, net external field across the pole pieces 26.

In Fig. 1, the brake element 18 is in a released position 40. In the released position 40, the brake element 18 is pulled by the releasing spring 34 to rotate about the brake hinge 32 until the brake element 18 (here the magnetic target section 28 thereof) contacts the mechanical stop 36. In the released position 40, the brake pad 30 is separated from the output member 38a. The releasing spring 34 thus ensures that the output member 38a is not braked when the EPM 14 is in the off state.

The arrangement 10a of this example further comprises a door leaf 42. The door leaf 42 is one example of an access member according to the present disclosure. In Fig. 1, the door leaf 42 is in a closed position 44. The door leaf 42 is rotatable from the closed position 44 to an open position.

The arrangement 10a of this example further comprises a transmission 46a. The transmission 46a is configured to transmit a movement of the door leaf 42 to a movement of the output member 38a. In this example, the transmission 46a is configured to transmit a rotation of the door leaf 42 (clockwise in Fig. 1) to a linear movement of the output member 38a (to the left in Fig. 1).

The transmission 46a is a speed increasing transmission, here exemplified as a gear train. In this specific example, the transmission 46a comprises a first gear wheel 48, a second gear wheel (not visible), a third gear wheel 50, a fourth gear wheel 52 and a fifth gear wheel 54. The second gear wheel is fixed to, and concentric with, the third gear wheel 50. The first gear wheel 48 meshes with the second gear wheel. The third gear wheel 50 meshes with the fourth gear wheel 52. The fourth gear wheel 52 meshes with the fifth gear wheel 54. The fifth gear wheel 54 meshes with the output member 38a. The second gear wheel is smaller than the first gear wheel 48, the third gear wheel 50 is larger than the second gear wheel, the fourth gear wheel 52 is smaller than the third gear wheel 50, and the fifth gear wheel 54 is smaller than the fourth gear wheel 52.

The first gear wheel 48 is fixed to the door leaf 42. The first gear wheel 48 is one example of an input member according to the present disclosure.

The arrangement 10a of this example further comprises an electromagnetic generator 56. The generator 56 comprises a stator (not shown) and a rotor 58. In this example, the fifth gear wheel 54 is fixed to the rotor 58. The rotor 58 is thereby driven by the transmission 46a. The rotor 58 is thus arranged to be driven to generate electric energy by rotation of the door leaf 42. By means of the transmission 46a, the rotor 58 rotates at a high speed compared to the rotational speed of the door leaf 42 to thereby improve the energy harvesting capacity of the generator 56. When the brake element 18 is in the released position 40, the door leaf 42 can be manually opened and closed as desired.

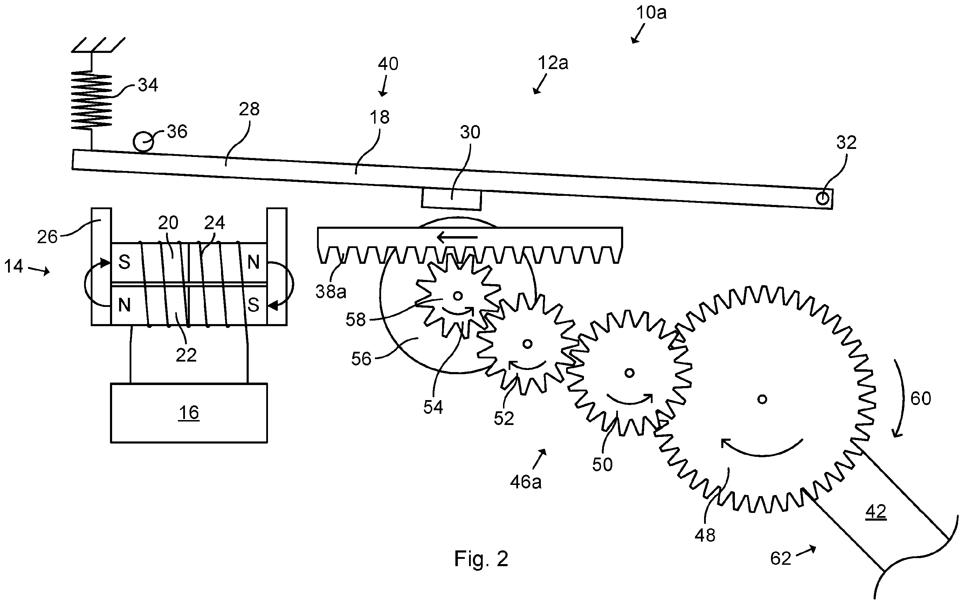

Fig. 2 schematically represents the arrangement 10a when the door leaf 42 has moved in an opening direction 60 from the closed position 44 to an open position 62. By means of the transmission 46a, the output member 38a is thereby caused to move linearly. More specifically and with reference to Fig. 2, the door leaf 42 and the first gear wheel 48 rotate together in a clockwise direction, the second gear wheel and the third gear wheel 50 rotate in a counterclockwise direction, the fourth gear wheel 52 rotates in a clockwise direction, the fifth gear wheel 54 rotates in a counterclockwise direction, and the output member 38a moves linearly to the left.

During the movement of the door leaf 42 in the opening direction 60, electric energy may or may not be harvested by means of the electric generator 56. In order to hold the door leaf 42 in the open position 62, the EPM 14 is activated to an on state, as described in the following.

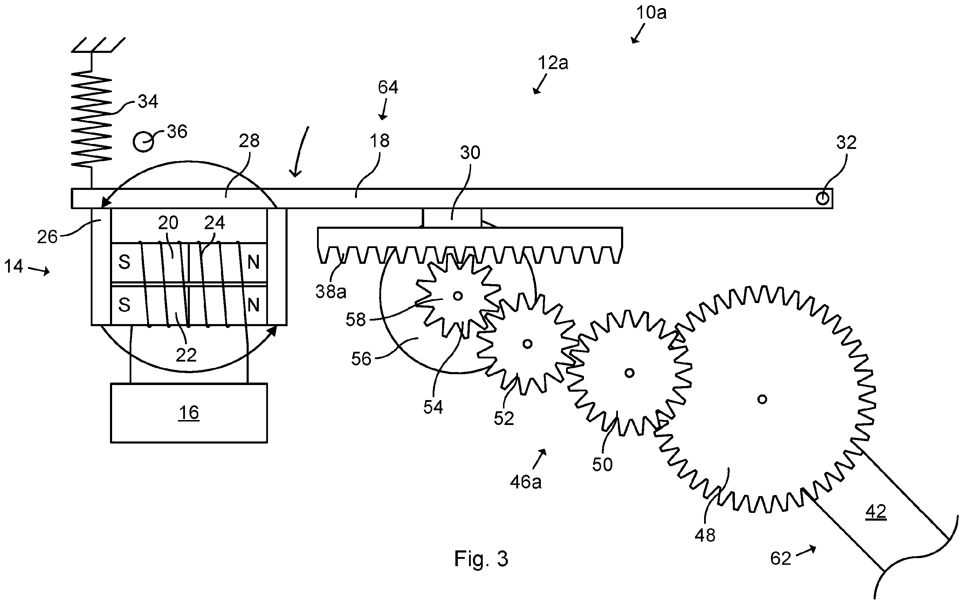

Fig. 3 schematically represents the arrangement 10a when the brake element 18 adopts a braking position 64. In Fig. 3, the control system 16 has sent a second current pulse through the electric coil 24. A second magnetic field is thereby generated that causes the soft magnet 22 to change polarity or flip from the first polarity to a second polarity. Since the hard magnet 20 has a higher coercivity than the soft magnet 22, the polarity of the hard magnet 20 is not affected by the magnetic field. When the soft magnet 22 adopts the second polarity, the magnetization directions of the hard magnet 20 and the soft magnet 22 are aligned. As a consequence, the hard magnet 20 and the soft magnet 22 combine to produce an external magnetic field. The EPM 14 thereby adopts the on state. Once the soft magnet 22 has switched to the second polarity, no energy is required to keep the EPM 14 in the on state.

The external magnetic field generated by the EPM 14 acts on the magnetic target section 28, here by magnetic attraction. The brake element 18 is thereby forced into the braking position 64 against the force of the releasing spring 34, which is extended. The EPM 14 thus pulls the brake element 18 such that the brake pad 30 is forced against the output member 38a. In the braking position 64, the brake pad 30 contacts and frictionally engages the output member 38a. The brake element 18 thereby brakes the output member 38a by friction. In this way, the door leaf 42 can be held in the open position 62 without energy consumption. The door leaf 42 is not closed until the brake device 12a again adopts the released state.

Since the transmission 46a is a speed increasing transmission, the holding force acting on the output member 38a by the brake element 18 is substantially lower than if the brake element 18 would act on the door leaf 42 directly. This enables the rating of the brake device 12a to be reduced.

In this example, the brake element 18 (here the magnetic target section 28) is in contact with the pole pieces 26 in the braking position 64. The mechanical stop 36 and the pole pieces 26 thus define two distinct positions for the released position 40 and the braking position 64, respectively.

In order to release the brake device 12a, the control system 16 sends a first current pulse through the electric coil 24. A first magnetic field is thereby generated that causes the soft magnet 22 to change polarity or flip from the second polarity back to the first polarity. When the soft magnet 22 adopts the first polarity, the hard magnet 20 and the soft magnet 22 again have opposing magnetizations such that the EPM 14 adopts the off state producing no net external field across the pole pieces 26. The magnetic force from the EPM 14 acting on the magnetic target section 28 thereby ceases and the releasing spring 34 forces the brake element 18 to move from the braking position 64 back to the released position 40. When the door leaf 42 moves from the open position 62 back to the closed position 44, electric energy is harvested by the generator 56.

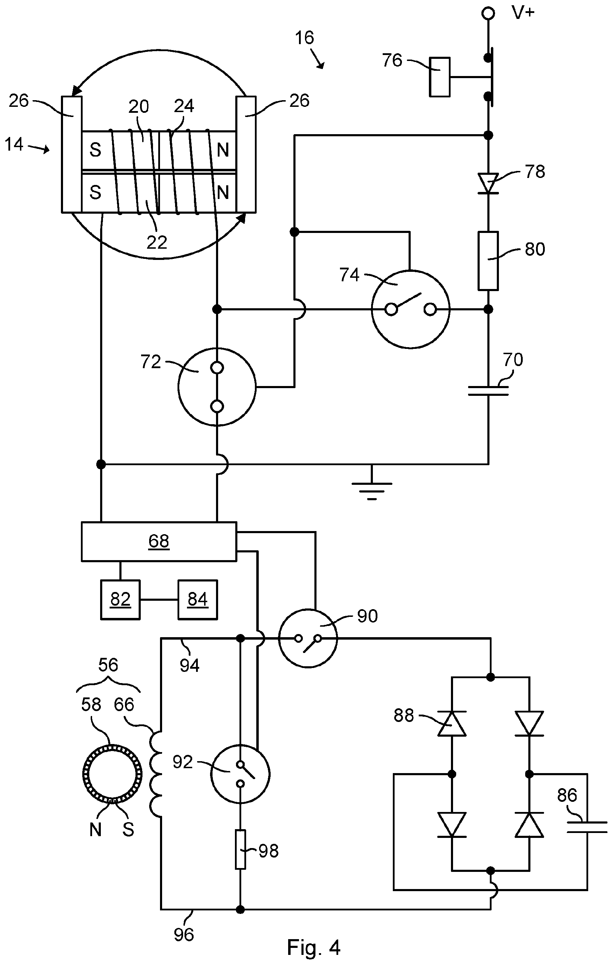

Fig. 4 schematically represents the EPM 14 and the control system 16. In Fig. 4, the stator 66 of the generator 56 can also be seen. The control system 16 further comprises a driver 68. The driver 68 is configured to apply the first current pulse and the second current pulse to the electric coil 24 for switching the polarity of the soft magnet 22.

The control system 16 further comprises a capacitor 70, a normally open switch 72 and a normally closed switch 74. Also the capacitor 70 is configured to apply a first current pulse to the electric coil 24 to switch the soft magnet 22 from the second polarity to the first polarity, i.e. to switch the EPM 14 from the on state to the off state. The capacitor 70 is used for emergency closing of the door leaf 42.

The normally open switch 72 is connected in series with the driver 68 and the electric coil 24. The normally open switch 72 is an electrically controlled switch. With no voltage applied, the normally open switch 72 is open. With a (positive) voltage applied to its control pin, the normally open switch 72 is closed. The normally open switch 72 can be implemented using an enhancement mode MOS transistor.

The normally closed switch 74 is connected in series with the capacitor 70 and the electric coil 24. The normally closed switch 74 is an electrically controlled switch. With no voltage applied, the normally closed switch 74 is closed. With a (positive) voltage applied to its control pin, the normally closed switch 74 is open. The normally closed switch 74 can be implemented using a depletion mode MOS transistor.

Fig. 4 further shows a control voltage V+. The control voltage V+ may for example be +12 V.

The control system 16 of this example further comprises a normally closed manual switch 76. The manual switch 76 may be used to manually close the door leaf 42 and also to test the functionality of the control system 16.

The control system 16 further comprises a diode 78 and an electric resistor 80. The resistor 80 functions to set a proper charging current for the capacitor 70.

In Fig. 4, the control system 16 is in a normal mode where a power supply is available, e.g. from a battery or a mains power supply. In the normal mode, the normally open switch 72 is closed and the normally closed switch 74 is open. The EPM 14 is thereby connected to the driver 68, and the capacitor 70 is charged and disconnected from the EPM 14.

The control system 16 of this example further comprises a data processing device 82 and a memory 84. The memory 84 comprises a computer program stored thereon. The computer program comprises program code which, when executed by the data processing device 82 causes the data processing device 82 to perform, or command performance of, various steps as described herein. The data processing device 82 may for example command the driver 68 to send the first pulse and the second pulse to effect the switching of the EPM 14 to the off state and the on state, respectively. Moreover, the data processing device 82 may monitor a time period during which the brake device 12a should be in the braking state to hold the door leaf 42 in an open position 62.

The control system 16 further comprises energy harvesting electronics including an electric energy storage device, here exemplified as a harvesting capacitor 86, and four harvesting diodes 88 arranged in a diode bridge. The harvesting diodes 88 are arranged to rectify the voltage from the generator 56.

The control system 16 further comprises a disconnection switch 90 and a shorting switch 92. Each of the disconnection switch 90 and the shorting switch 92 is controlled by the driver 68. Fig. 4 further shows a positive line 94 and a ground line 96. The positive line 94 and the ground line 96 are connected to respective terminals of the generator 56. In this example, the disconnection switch 90 is provided on the positive line 94. Each of the disconnection switch 90 and the shorting switch 92 may be implemented using a transistor, such as a MOSFET (Metal Oxide Semiconductor Field Effect Transistor).

The disconnection switch 90 is arranged to selectively disconnect the generator 56. When the disconnection switch 90 is open, the electric resistance becomes high, and the door leaf 42 moves relatively easily, in comparison with when moving the door leaf 42 to harvest electric energy.

The shorting switch 92 is arranged to selectively short-circuiting the terminals of the generator 56 over an electric harvesting resistor 98. When the shorting switch 92 is closed, the harvested electric energy is converted to heat in the harvesting resistor 98. The door leaf 42 then moves heavily in comparison with when the door leaf 42 moves to harvest electric energy. Thus, when the shorting switch 92 is closed, a high counter torque is provided in the generator 56, making the rotor 58 heavy to rotate by means of movement of the door leaf 42.

By selectively controlling the disconnection switch 90 and the shorting switch 92, the control system 16 can selectively change an electric load of the generator 56 to control the movement of the door leaf 42. The generator 56 thereby functions as an electronic brake.

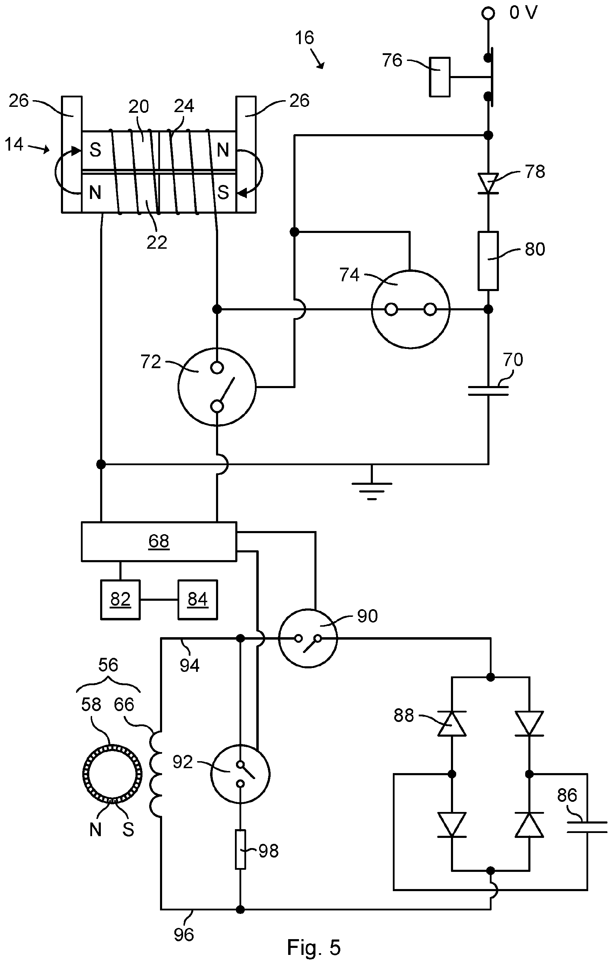

Fig. 5 schematically represents the EPM 14 and the control system 16 when a power supply is lost. The power loss may for example be caused by a fire alarm system, a power outage or a burglar alarm. The normally closed switch 74 is thereby closed and the normally open switch 72 is thereby opened.

When the power supply is lost, the control system 16 enters an emergency mode. The control voltage is then 0 V. In the emergency mode (or if the manual switch 76 is opened), the EPM 14 is disconnected from the driver 68 and the capacitor 70 is connected to the EPM 14. The discharge current from the capacitor 70 will ensure the soft magnet 22 adopts the first polarity, regardless of its initial polarity. The EPM 14 will thereby adopt the off state. As a consequence, it is ensured that the brake element 18 is in, or adopts, the released position 40 to release the door leaf 42. The diode 78 blocks the capacitor voltage from activating the normally closed switch 74 and the normally open switch 72.

The brake device 12a will always adopt the released state and the door leaf 42 will always be closed when the power supply is lost. By switching the manual switch 76, the same event as during power loss takes place.

In order to provide a safeguard against single component failure (both open circuit and short circuit failures), most components of the control system 16, such as the normally closed switch 74, the normally open switch 72 and the capacitor 70, may be quadrupled and be arranged in a serial-parallel configuration.

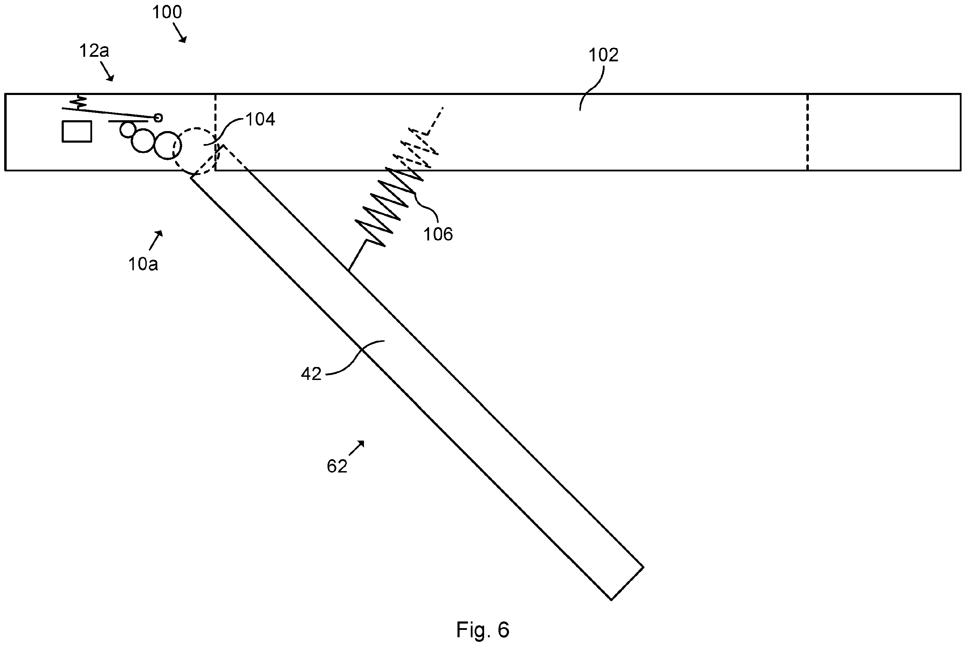

Fig. 6 schematically represents an access member system 100. The access member system 100 comprises the arrangement 10a which in turn comprises the brake device 12a. In addition to the door leaf 42, the access member system 100 further comprises a frame 102 and a door hinge 104. The door leaf 42 is rotatable relative to the frame 102 about the door hinge 104. In Fig. 6, the door leaf 42 is in an open position 62. The first gear wheel 48 is here concentric with the door hinge 104. The brake device 12a is provided inside the frame 102.

As shown in Fig. 6, the arrangement 10a further comprises a closing spring 106. One end of the closing spring 106 is connected to the door leaf 42 and one end of the closing spring 106 is connected to the frame 102. The closing spring 106 forces the door leaf 42 towards the closed position 44. The door leaf 42 can thus be opened against the force of the closing spring 106. The holding time during which the brake device 12a is in the braking state to hold the door leaf 42 may for example be 5 s to 10 s.

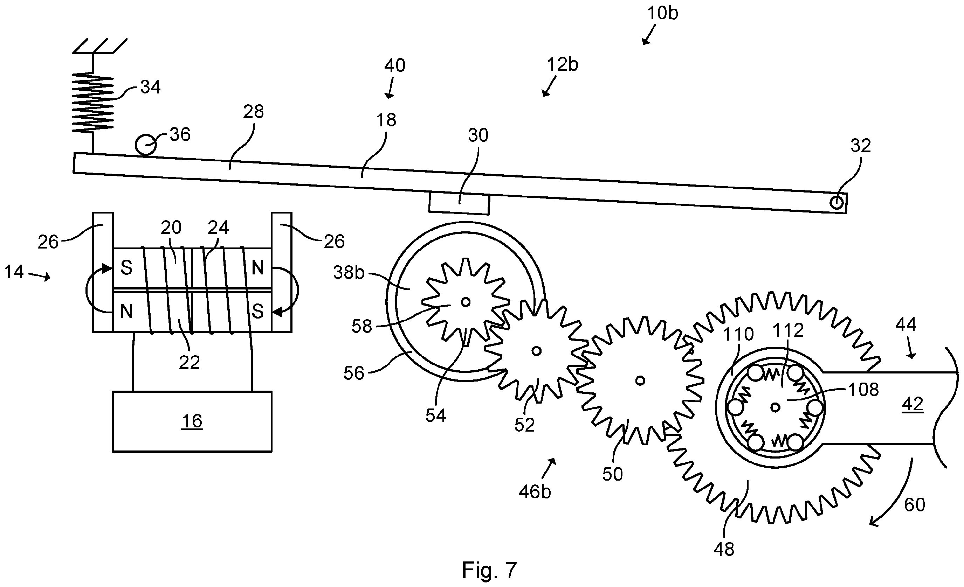

Fig. 7 schematically represents a further arrangement 10b comprising a further brake device 12b. Mainly differences with respect to Figs. 1 to 6 will be described.

The arrangement 10b comprises a transmission 46b. The transmission 46b differs from the transmission 46a in that the transmission 46b comprises a freewheel device 108. The freewheel device 108 of this example comprises a drive member 110 and a driven member 112. The drive member 110 is fixed to the door leaf 42. The driven member 112 is fixed to the first gear wheel 48. When the drive member 110 rotates in the clockwise direction (according to Fig. 7), the driven member 112 is not driven by the drive member 110. When the drive member 110 rotates in the counterclockwise direction (according to Fig. 7), the driven member 112 is driven by the drive member 110. The freewheel device 108 is thus configured to freewheel when the door leaf 42 moves in the opening direction 60.

By means of the freewheel device 108, it is always possible to open the door leaf 42. Moreover, the freewheel device 108 enables the door leaf 42 to be opened more even if the brake device 12b is in the braking state.

Furthermore, the arrangement 10b in Fig. 7 differs from the arrangement 10a in that the arrangement 10b comprises an output member 38b. The output member 38b is a circular member fixed to the fifth gear wheel 54. The output member 38b is thus rotatable. Due to the freewheel device 108, the output member 38b will only rotate in the counterclockwise direction. The brake element 18 of the brake device 12b brakes the output member 38b when adopting the braking position 64 in the same way as the brake element 18 of the brake device 12a brakes the output member 38a when adopting the braking position 64.

## Claims

1. A brake device (12a, 12b) comprising:
- a hard magnet (20);
- a soft magnet (22) configured to switch polarity between a first polarity and a second polarity when being subjected to a magnetic field and configured to maintain the polarity when the magnetic field is removed;
- an electric coil (24) located around the soft magnet (22);
- an electric control system (16) configured to apply a current pulse to the electric coil (24) to generate the magnetic field for changing the polarization of the soft magnet (22); and
- a brake element (18) comprising a magnetic target section (28), the brake element (18) being arranged to move to a released position (40) when the soft magnet (22) adopts the first polarity, and arranged to move to a braking position (64) due to a magnetic field generated by the hard magnet (20) and the soft magnet (22) in combination and acting on the magnetic target section (28) when the soft magnet (22) adopts the second polarity.

2. The brake device (12a, 12b) according to claim 1, wherein the brake element (18) is forced towards the released position (40).

3. The brake device (12a, 12b) according to claim 2, further comprising a releasing spring (34) arranged to force the brake element (18) towards the released position (40).

4. The brake device (12a, 12b) according to any of the preceding claims, further comprising a brake hinge (32), wherein the brake element (18) is rotatable about the brake hinge (32) between the released position (40) and the braking position (64).

5. The brake device (12a, 12b) according to any of the preceding claims, wherein the control system (16) comprises:
- a driver (68) for applying a first current pulse to the electric coil (24) to switch the soft magnet (22) from the second polarity to the first polarity, and for applying a second current pulse to the electric coil (24) to switch the soft magnet (22) from the first polarity to the second polarity;
- a capacitor (70) for applying a first current pulse to the electric coil (24) to switch the soft magnet (22) from the second polarity to the first polarity;
- a normally open switch (72) connected in series with the driver (68) and the electric coil (24); and
- a normally closed switch (74) connected in series with the capacitor (70) and the electric coil (24).

6. An arrangement (10a, 10b) for controlling movements of an access member (42) relative to a frame (102), the arrangement (10a, 10b) comprising a brake device (12a, 12b) according to any of the preceding claims arranged to brake the access member (42).

7. The arrangement (10a, 10b) according to claim 6, wherein the arrangement (10a, 10b) is a door closer and the access member (42) is a door leaf.

8. The arrangement (10a, 10b) according to claim 6 or 7, further comprising an electromagnetic generator (56) having a rotor (58) arranged to be driven to generate electric energy by movement of the access member (42).

9. The arrangement (10a, 10b) according to claim 8, wherein the control system (16) is electrically powered by the generator (56).

10. The arrangement (10a, 10b) according to any of claims 6 to 9, further comprising an output member (38a, 38b) arranged to be contacted by the brake element (18) when the brake element (18) adopts the braking position (64).

11. The arrangement (10a, 10b) according to any of claim 10, further comprising a transmission (46a, 46b) arranged to transmit a movement of the access member (42) to a movement of the output member (38a, 38b).

12. The arrangement (10b) according to claim 11, wherein the transmission (46b) comprises a freewheel device (108) configured to freewheel when the access member (42) moves in an opening direction (60).

13. The arrangement (10a, 10b) according to claim 11 or 12, when depending on claim 8, wherein the rotor (58) is arranged to be driven by the transmission (46a, 46b).

14. The arrangement (10a, 10b) according to any of claims 11 to 13, wherein the transmission (46a, 46b) is a speed increasing transmission.

15. An access member system (100) comprising a frame (102), an access member (42) movable relative to the frame (102), and an arrangement (10a, 10b) according to any of claims 6 to 14.

16. The access member system (100) according to claim 15, further comprising a closing spring (106) arranged to force the access member (42) towards a closed position (44).

## Patentansprüche

1. Bremsvorrichtung (12a, 12b), umfassend:
- einen Hartmagneten (20);
- einen Weichmagneten (22), der dazu konfiguriert ist, Polarität zwischen einer ersten Polarität und einer zweiten Polarität zu schalten, wenn er einem Magnetfeld ausgesetzt wird, und der dazu konfiguriert ist, die Polarität beizubehalten, wenn das Magnetfeld entfernt wird;
- eine elektrische Spule (24), die um den Weichmagneten (22) liegt;
- ein elektrisches Steuersystem (16), das dazu konfiguriert ist, einen Stromimpuls an die elektrische Spule (24) anzulegen, um das Magnetfeld zum Ändern der Polarität des Weichmagneten (22) zu erzeugen; und
- ein Bremselement (18), das einen magnetischen Zielabschnitt (28) umfasst, wobei das Bremselement (18) dazu eingerichtet ist, sich in eine freigegebene Position (40) zu bewegen, wenn der Weichmagnet (22) die erste Polarität annimmt, und dazu eingerichtet ist, sich aufgrund eines Magnetfelds, das durch den Hartmagneten (20) und den Weichmagneten (22) gemeinsam erzeugt wird und auf den magnetischen Zielabschnitt (28) einwirkt, in eine Bremsposition (64) zu bewegen, wenn der Weichmagnet (22) die zweite Polarität annimmt.

2. Bremsvorrichtung (12a, 12b) nach Anspruch 1, wobei das Bremselement (18) in Richtung der freigegebenen Position (40) gezwungen wird.

3. Bremsvorrichtung (12a, 12b) nach Anspruch 2, die weiter eine Freigabefeder (34) umfasst, die dazu eingerichtet ist, das Bremselement (18) in Richtung der gelösten Position (40) zu zwingen.

4. Bremsvorrichtung (12a, 12b) nach einem der vorstehenden Ansprüche, die weiter ein Bremsscharnier (32) umfasst, wobei das Bremselement (18) um das Bremsscharnier (32) zwischen der freigegebenen Position (40) und der Bremsposition (64) drehbar ist.

5. Bremsvorrichtung (12a, 12b) nach einem der vorstehenden Ansprüche, wobei das Steuersystem (16) umfasst:
- einen Treiber (68) zum Anlegen eines ersten Stromimpulses an die elektrische Spule (24), um den Weichmagneten (22) von der zweiten Polarität in die erste Polarität umzuschalten, und zum Anlegen eines zweiten Stromimpulses an die elektrische Spule (24), um den Weichmagneten (22) von der ersten Polarität in die zweite Polarität umzuschalten;
- einen Kondensator (70) zum Anlegen eines ersten Stromimpulses an die elektrische Spule (24), um den Weichmagneten (22) von der zweiten Polarität in die erste Polarität umzuschalten;
- einen normalerweise offenen Schalter (72), der in Reihe mit dem Treiber (68) und der elektrischen Spule (24) geschaltet ist; und
- einen normalerweise geschlossenen Schalter (74), der in Reihe mit dem Kondensator (70) und der elektrischen Spule (24) geschaltet ist.

6. Einrichtung (10a, 10b) zum Steuern von Bewegungen eines Zugangselements (42) in Bezug zu einem Rahmen (102), wobei die Einrichtung (10a, 10b) eine Bremsvorrichtung (12a, 12b) nach einem der vorstehenden Ansprüche umfasst, die zum Bremsen des Zugangselements (42) eingerichtet ist.

7. Einrichtungen (10a, 10b) nach Anspruch 6, wobei die Einrichtung (10a, 10b) ein Türschließer ist und das Zugangselement (42) ein Türblatt ist.

8. Einrichtung (10a, 10b) nach Anspruch 6 oder 7, die weiter einen elektromagnetischen Generator (56) umfasst, der einen Rotor (58) aufweist, der dazu eingerichtet ist, durch Bewegung des Zugangselements (42) angetrieben zu werden, um elektrische Energie zu erzeugen.

9. Einrichtung (10a, 10b) nach Anspruch 8, wobei das Steuersystem (16) durch den Generator (56) mit Strom versorgt ist.

10. Einrichtung (10a, 10b) nach einem der Ansprüche 6 bis 9, die weiter ein Ausgangselement (38a, 38b) umfasst, das dazu eingerichtet ist, von dem Bremselement (18) berührt zu werden, wenn das Bremselement (18) die Bremsposition (64) annimmt.

11. Einrichtung (10a, 10b) nach Anspruch 10, die weiter ein Getriebe (46a, 46b) umfasst, das dazu eingerichtet ist, eine Bewegung des Zugangselements (42) in eine Bewegung des Ausgangselements (38a, 38b) zu übertragen.

12. Einrichtung (10b) nach Anspruch 11, wobei das Getriebe (46b) eine Freilaufvorrichtung (108) umfasst, die dazu konfiguriert ist, einen Freilauf durchzuführen, wenn sich das Zugangselement (42) in eine Öffnungsrichtung (60) bewegt.

13. Einrichtung (10a, 10b) nach Anspruch 11 oder 12, sofern abhängig von Anspruch 8, wobei der Rotor (58) dazu eingerichtet ist, von dem Getriebe (46a, 46b) angetrieben zu werden.

14. Einrichtung (10a, 10b) nach einem der Ansprüche 11 bis 13, wobei das Getriebe (46a, 46b) ein Übersetzungsgetriebe ist.

15. Zugangselementsystem (100), das einen Rahmen (102), ein in Bezug auf den Rahmen (102) bewegliches Zugangselement (42) und eine Einrichtung (10a, 10b) nach einem der Ansprüche 6 bis 14 umfasst.

16. Zugangselementsystem (100) nach Anspruch 15, das weiter eine Schließfeder (106) umfasst, die dazu eingerichtet ist, das Zugangselement (42) in Richtung einer geschlossenen Position (44) zu drücken.

## Revendications

1. Dispositif de frein (12a, 12b) comprenant :
- un aimant dur (20) ;
- un aimant doux (22) configuré pour commuter une polarité entre une première polarité et une seconde polarité lorsqu'il est soumis à un champ magnétique, et configuré pour maintenir la polarité lorsque le champ magnétique est supprimé ;
- une bobine électrique (24) située autour de l'aimant doux (22) ;
- un système de commande électrique (16) configuré pour appliquer une impulsion de courant à la bobine électrique (24) pour générer le champ magnétique afin de modifier la polarisation de l'aimant doux (22) ; et
- un élément de frein (18) comprenant une section cible magnétique (28), l'élément de frein (18) étant agencé pour se déplacer vers une position libérée (40) lorsque l'aimant doux (22) adopte la première polarité, et agencé pour se déplacer vers une position de freinage (64) en raison d'un champ magnétique généré par l'aimant dur (20) et l'aimant doux (22) en combinaison et agissant sur la section cible magnétique (28) lorsque l'aimant doux (22) adopte la seconde polarité.

2. Dispositif de frein (12a, 12b) selon la revendication 1, dans lequel l'élément de frein (18) est forcé vers la position libérée (40).

3. Dispositif de frein (12a, 12b) selon la revendication 2, comprenant en outre un ressort de libération (34) agencé pour forcer l'élément de frein (18) vers la position libérée (40).

4. Dispositif de frein (12a, 12b) selon l'une quelconque des revendications précédentes, comprenant en outre une charnière de frein (32), dans lequel l'élément de frein (18) peut tourner autour de la charnière de frein (32) entre la position libérée (40) et la position de freinage (64).

5. Dispositif de frein (12a, 12b) selon l'une quelconque des revendications précédentes, dans lequel le système de commande (16) comprend :
- un pilote (68) pour appliquer une première impulsion de courant à la bobine électrique (24) pour commuter l'aimant doux (22) de la seconde polarité à la première polarité, et pour appliquer une seconde impulsion de courant à la bobine électrique (24) pour commuter l'aimant doux (22) de la première polarité à la seconde polarité ;
- un condensateur (70) pour appliquer une première impulsion de courant à la bobine électrique (24) pour commuter l'aimant doux (22) de la seconde polarité à la première polarité ;
- un commutateur normalement ouvert (72) raccordé en série au pilote (68) et à la bobine électrique (24) ; et
- un commutateur normalement fermé (74) raccordé en série au condensateur (70) et à la bobine électrique (24).

6. Agencement (10a, 10b) pour commander des déplacements d'un élément d'accès (42) par rapport à un cadre (102), l'agencement (10a, 10b) comprenant un dispositif de frein (12a, 12b) selon l'une quelconque des revendications précédentes agencé pour freiner l'élément d'accès (42).

7. Agencement (10a, 10b) selon la revendication 6, dans lequel l'agencement (10a, 10b) est un ferme-porte et l'élément d'accès (42) est un vantail de porte.

8. Agencement (10a, 10b) selon la revendication 6 ou 7, comprenant en outre un générateur électromagnétique (56) présentant un rotor (58) agencé pour être entraîné afin de générer de l'énergie électrique par un déplacement de l'élément d'accès (42).

9. Agencement (10a, 10b) selon la revendication 8, dans lequel le système de commande (16) est alimenté électriquement par le générateur (56).

10. Agencement (10a, 10b) selon l'une quelconque des revendications 6 à 9, comprenant en outre un élément de sortie (38a, 38b) agencé pour être mis en contact par l'élément de frein (18) lorsque l'élément de frein (18) adopte la position de freinage (64).

11. Agencement (10a, 10b) selon la revendication 10, comprenant en outre une transmission (46a, 46b) agencée pour transmettre un déplacement de l'élément d'accès (42) à un déplacement de l'élément de sortie (38a, 38b).

12. Agencement (10b) selon la revendication 11, dans lequel la transmission (46b) comprend un dispositif à roue libre (108) configuré pour fonctionner en roue libre lorsque l'élément d'accès (42) se déplace dans une direction d'ouverture (60).

13. Agencement (10a, 10b) selon la revendication 11 ou 12, lorsqu'elle dépend de la revendication 8, dans lequel le rotor (58) est agencé pour être entraîné par la transmission (46a, 46b).

14. Agencement (10a, 10b) selon l'une quelconque des revendications 11 à 13, dans lequel la transmission (46a, 46b) est une transmission à augmentation de vitesse.

15. Système d'élément d'accès (100) comprenant un cadre (102), un élément d'accès (42) pouvant se déplacer par rapport au cadre (102) et un agencement (10a, 10b) selon l'une quelconque des revendications 6 à 14.

16. Système d'élément d'accès (100) selon la revendication 15, comprenant en outre un ressort de fermeture (106) agencé pour forcer l'élément d'accès (42) vers une position fermée (44).
